# EUROPÄISCHE PATENTSCHRIFT

(11) **EP 0 732 243 B1**
(45) Veröffentlichungstag und Bekanntmachung des Hinweises auf die Patenterteilung: **15.03.2000**
(21) Anmeldenummer: 96100383.7
(22) Anmeldetag: 12.01.1996
(51) Int. Cl.: B60T 11/04

(54) **Vorrichtung zur Betätigung einer Feststellbremse**
Arrangement for actuating a parking brake
Dispositif pour actionner un frein de stationnement

(30) Priorität: 16.03.1995 DE 19509469
(43) Veröffentlichungstag der Anmeldung: 18.09.1996
(73) Patentinhaber: Dr.Ing.h.c. F. Porsche Aktiengesellschaft, 70435 Stuttgart (DE)
(72) Erfinder: Baumann, Hans-Uwe, D-70437 Stuttgart (DE); Paleczek, Josef, D-71262 Weil der Stadt (DE)

(56) Entgegenhaltungen:
- BE-A- 666 395
- DE-A- 3 924 549

## Beschreibung

Die Erfindung bezieht sich auf eine Vorrichtung zur Betätigung einer Feststellbremse nach dem Oberbegriff des Anspruchs 1.

Aus der DE 39 24 549 C2 ist eine Vorrichtung zur Betätigung einer Fahrzeug-Feststellbremse bekannt, die Umlenkbahnen für Zugglieder in einem Gehäuse aufweist. Die Zugglieder im Bereich der Umlenkbahnen bestehen aus Ketten, welche jeweils mit einem Bowdenzug verbunden sind.

Aufgabe der Erfindung ist es, eine Betätigungsvorrichtung für eine Feststellbremse zu schaffen, die kompakt und kleinbauend ausgeführt ist, eine einfache Montagemöglichkeit verwirklicht und mit der eine unterstützende Rückstellung der Handbremse gewährleistet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung erzielten Vorteile bestehen unter anderem darin, daß die ein Umlenkelement für die Zugglieder, wie beispielsweise für die Zugseile bildende Einzelsegmente, ineinandergeführt sind, wodurch eine platzsparende und kompakte Baueinheit erzielt wird.

Diese Segmente sind in einem Gehäuse, das beispielsweise aus einem einteiligem Gußteil besteht, schwenkbar gelagert und bilden mit diesem eine Montageeinheit, welche ohne Zugseile im Fahrzeug vormontierbar sind . Die Zugseile werden erst nach Befestigung des Gehäuses an einem Fahrzeugquerträger oder Motorschottwand eingefädelt. Dies erfolgt in vorteilhafter Weise über Einführkanäle, die von außen ins Gehäuse verlaufen und im Inneren direkt zu den Segmenten geführt sind.

Die Segmente weisen zur Aufnahme der Zugseile Führungen auf, die mit entsprechenden Führungen im Gehäuse zusammenwirken. Diese Gehäuseführungen ermöglichen, daß die Zugseile beim Einfädeln von außen um die Segmente herumgeleitet werden. Es ist somit eine einfache Montage der Zugseile bei angeschraubtem Gehäuse am Fahrzeugquerträger oder an anderen Orten des Fahrzeugaufbaues möglich.

Die Segmente sind über ein Rückstellelement, wie z.B. eine Feder oder ein elastisches Gummielement, von einer Betriebsstellung bei angezogener Handbremse mit Unterstützung über das Rückstellelement in eine Ruhestellung rückstellbar.

Das Gehäuse ist einteilig so ausgeführt, daß die Segmente über einen Zapfen und die Feder über einen Bolzen gelagert sind. Die Führungskanäle im äußeren Bereich sind einteilig und die Umlenkkanäle im inneren Bereich des Gehäuses sind vorzugsweise ebenfalls einteilig mit dem Gehäuse ausgeführt, sie können aber auch aus einem Kunststoff bestehen und mit dem Gehäuse verbunden sein. Es ist somit in einfacher Weise möglich, bei befestigtem Gehäuse die Zugseile von außen auf die Segmente einzufädeln und zum Übertragungselement durchzuführen und hier einzuhängen.

Die Segmente können auch nur annähernd teilkreisförmig sein, d.h. sie sind spiralförmig ausgeführt, derart, daß verschiedene Hebelarme in bezug auf die Drehachse herstellbar sind. Hierdurch wird eine Über- oder Untersetzung möglich.

Ein Ausführungsbeispiel der Erfindung ist in der Zeichnung dargestellt und wird im folgenden näher beschrieben.

Es zeigen
- Fig. 1: eine Vorderansicht einer Betätigungseinrichtung mit Gehäuse,
- Fig. 2: eine Seitenansicht der Vorrichtung in Pfeilrichtung Z gesehen,
- Fig. 3: einen Schnitt nach der Linie III-III der Fig. 2,
- Fig. 4: eine Draufsicht auf die Vorrichtung mit einem Übertragungselement,
- Fig. 5: eine Draufsicht auf Segmente eines Umlenkelements,
- Fig. 6: einen Schnitt nach der Linie VI-VI der Fig. 5,
- Fig. 7: einen Schnitt nach der Linie VII-VII der Fig. 5 und

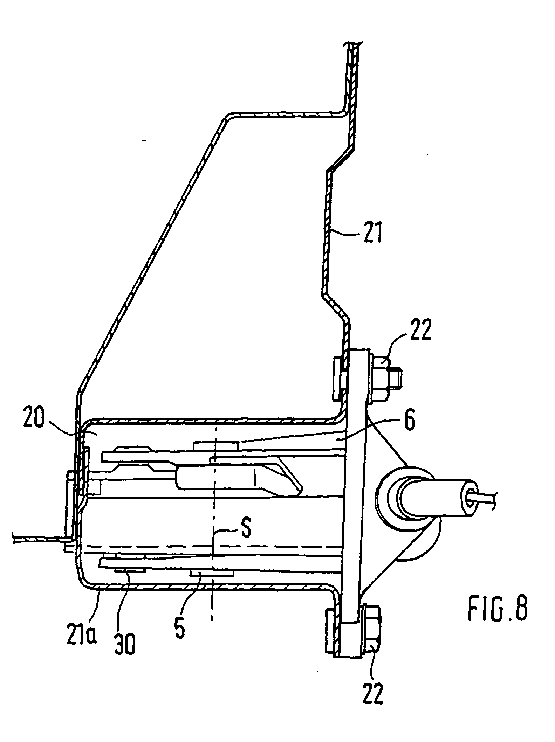

- Fig. 8: einen Schnitt durch einen Fahrzeugquerträger mit eingesetztem Gehäuse für die Betätigungsvorrichtung.

Eine Betätigungsvorrichtung 1 für eine Feststellbremse umfaßt zwei als Umlenkelemente 2 ausgebildete Segmente 3 und 4, die auf einem Zapfen 5 in einem Gehäuse 6 schwenkbar zueinander gehalten sind. Über ein Rückstellelement, wie beispielsweise über eine Schenkelfeder 7, sind die Segmente 3, 4 in einer Ruhestellung gehalten. Diese wird bei gelöster Handbremse eingenommen. In dieser Ruhestellung stützen sich Nasen N1 und N2 der Segmente am Bolzen 30 ab und positionieren die Segmente zueinander. Am Gehäuse können auch Anschläge vorgesehen sein, so daß die Nasen an den Segmenten entfallen können.

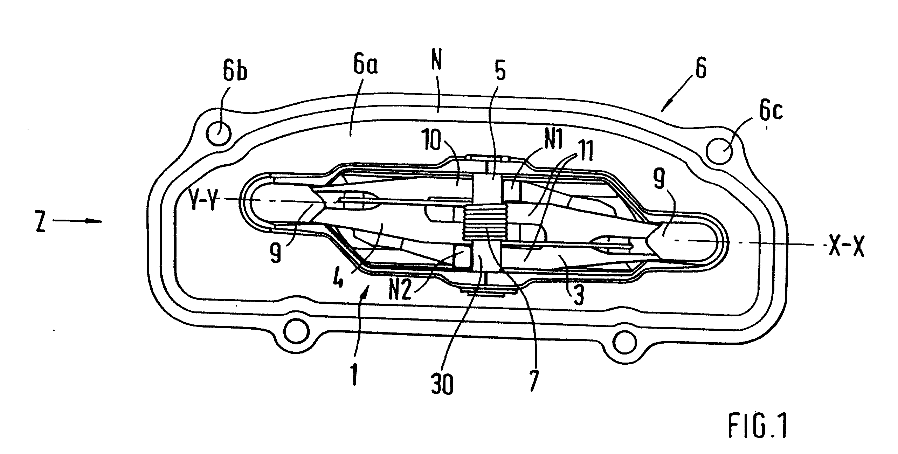

Die Segmente 3, 4 weisen jeweils eine teilkreisförmige Umlenkkontur K für Zugglieder, wie beispielsweise Zugseile 8, 8a mit einer keilförmigen Führungsrille 9 auf. Die Segmente 3, 4 sind über ineinandergreifende Schenkel 10,11 (Fig. 1) aufeinander geführt.

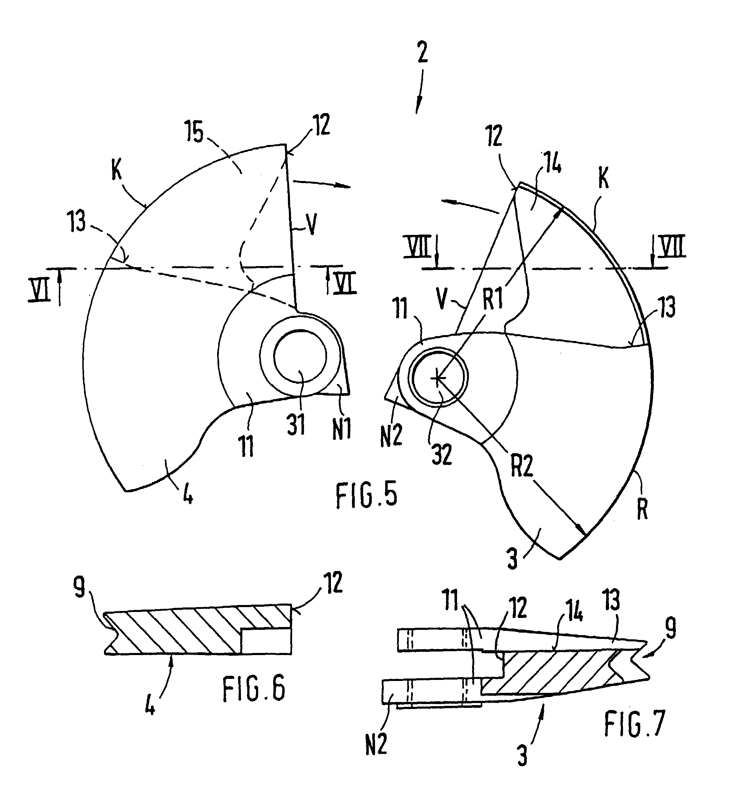

Wie in den Fig. 5 bis 7 näher dargestellt, weisen die Segmente 3, 4 jeweils Anschlagflächen 12, 13 auf, die aneinanderstehen, wenn sich die Segmente in Ruhestellung befinden, d.h. wenn die Handbremse gelöst ist und die Schenkelfeder 7 die Segmente gegeneinander drückt.

Zur Erzielung einer flachbauenden Anordnung der beiden Segmente 3, 4 weisen diese zur Außenoberfläche vertiefte Flächenabschnitte 14, 15 auf, die gegenüberliegend sind und auf denen die beiden Segmente 3, 4 gegenseitig geführt bzw. abgestützt sind. Hierdurch werden die Zugseile 8, 8a in zwei nahe beieinanderliegenden Ebenen X-X und Y-Y geführt. Im Übergang von diesen Flächenabschnitten 14, 15 zur Außenoberfläche der Segmente 3, 4 bilden sich Anschlagkanten 13, denen Anschlagkanten 12 an Vorderkanten V der Segmente 3, 4 gegenüberstehen.

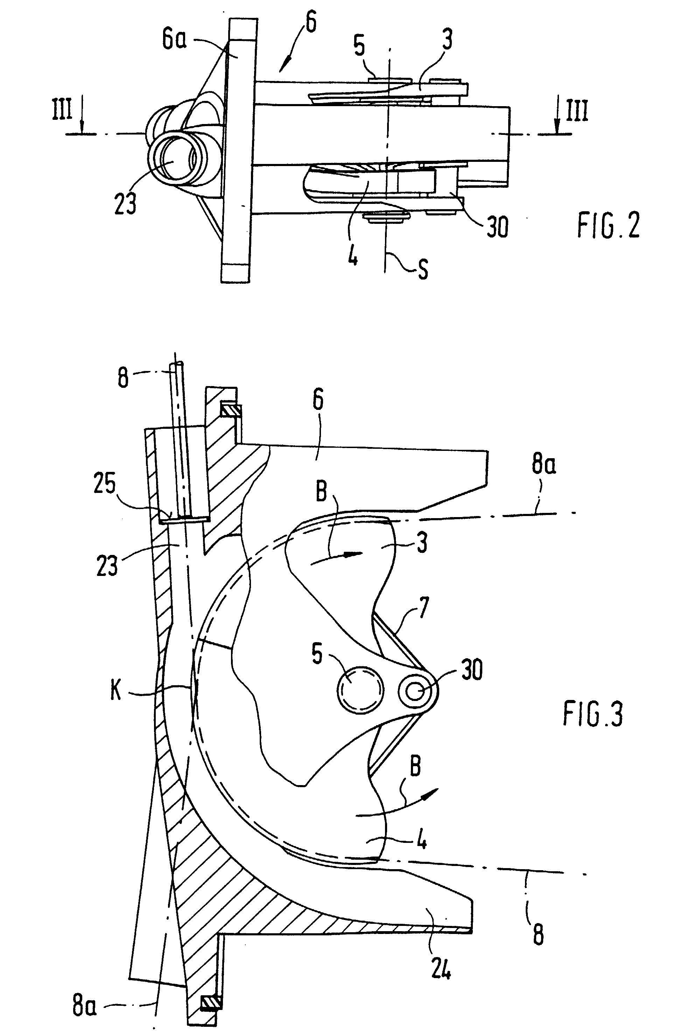

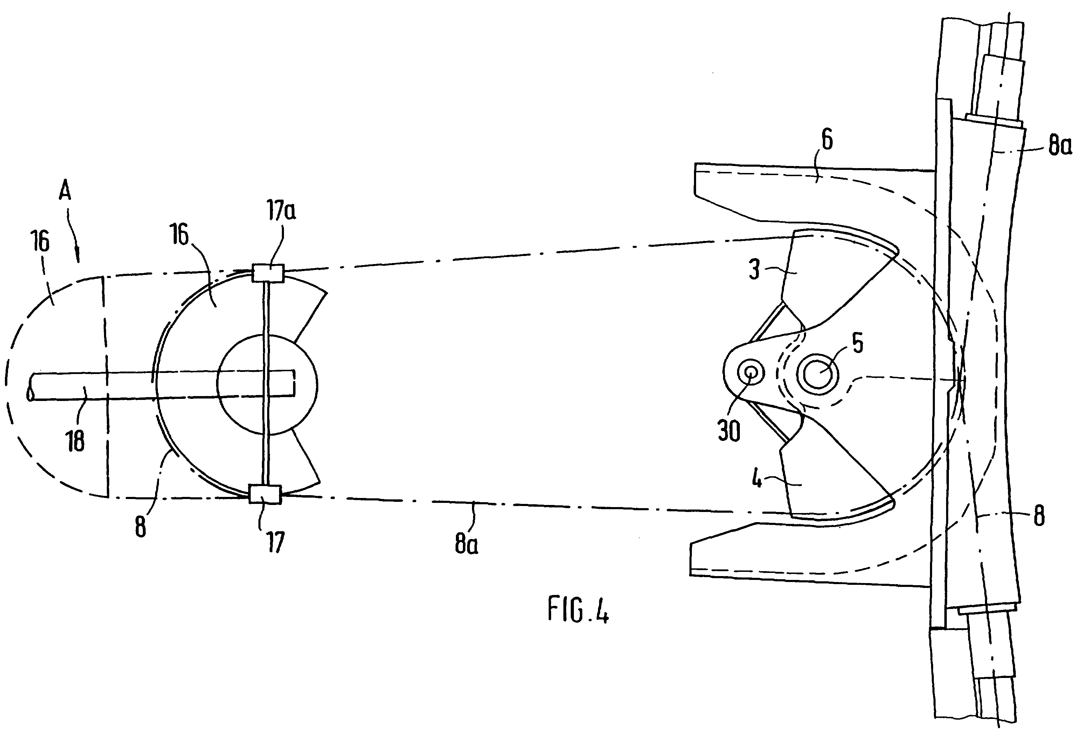

Wie in Fig. 4 näher dargestellt, umschlingen die Zugseile 8, 8a jeder Bremse ein Segment 3, 4. So ist das Zugseil 8 vom Segment 3 und das Zugseil 8a vom Segment 4 aufgenommen. Die Zugseile 8 und 8a sind jeweils in einem Übertragungselement 16 eingehängt, z.B. über einen angeformten Zapfen 17 für das Seil 8 und einen angeformten Zapfen 17a für das Seil 8a. Mit dem Übertragungselement 16 ist eine Zugstange 18 verbunden, die zu einem nicht dargestellten Handbremshebel geführt ist. Bei einem Bremsvorgang wird das Übertragungselement 16 in die Position A gezogen und somit werden auch die Zugseile 8, 8a angezogen, wobei sich die Segmente 3, 4 um den Schwenkzapfen 5 gegen eine Spannung der Feder 7 in Pfeirichtung B gegeneinander verdrehen. Bei einem Lösen der Bremse verschwenken sich die Segmente 3, 4 wieder in ihre Ausgangsstellung (Ruhestellung) zurück (Fig.3), wobei dieser Vorgang von der Feder 7 wesentlich unterstützt wird.

Die Rückstellfeder 7 stellt vor allem sicher, daß beim Einfädeln der Seile 8, 8a die Segmente 3, 4 sich nicht in eine von der Ruhestellung abweichende Position verstellen können.

Die Segmente 3, 4 sind in einem einteiligen Gußgehäuse 6 untergebracht, welches in einer Öffnung 20 eines Fahrzeugquerträgers 21 einsetzbar ist. Über Schrauben 22 wird das Gehäuse 6 am Querträger 21 befestigt. Über einen Abschlußdeckel 21a ist die Öffnung 22 nach unten hin abgeschlossen.

Das Gehäuse 6 weist Einführkanäle 23 für die Zugseile 8, 8a auf, die sich um die Außenkontur K der Segmente 3, 4 herum erstrecken und in einen geraden Kanal 24 auslaufen.

Zur Montage der Betätigungsvorrichtung wird das Gehäuse mit den eingebauten Segmenten 3, 4 im Querträger befestigt. Danach werden die Zugseile 8, 8a in die Kanäle 23 eingefädelt und bis zum Übertragungselement 16 geführt. Die Hüllen der Zugseile 8, 8a stützen sich im Kanal 23 am Absatz 25 ab.

Das Gehäuse weist eine Abschlussplatte 6a auf, in denen mindestens zwei Schraubenbohrungen diagonal angeordnet sind. Vorzugsweise werden vier Schraubenbohrungen vorgesehen, wobei an jeder Längsseite der Platte 6a zwei Schraubenbohrungen 6b, 6c vorgesehen sind. In dieser Platte 6a ist eine umlaufende Nut N zur Aufnahme eines Dichtelements vorgesehen. Die Lagerplatten für den Zapfen 5 erstrecken sich von der Gehäuseplatte 6a weg, wobei die geraden Führungskanäle 24 von im Querschnitt U-förmigen Gußteilen des Gehäuses 6 gebildet werden.

## Patentansprüche

1. Vorrichtung zur Betätigung einer Feststellbremse für ein Kraftfahrzeug mit radseitig angeordneten Bremseinrichtungen, die über Zugglieder betätigbar sind, welche über Umlenkelemente herumgeführt und unter Zwischenschaltung eines Übertragungselementes mit einem Handbremshebel verbunden sind, dadurch gekennzeichnet, daß die Umlenkelemente aus zwei gegeneinander und auf einer gemeinsamen Schwenkachse (S) gelagerten Segmenten (3, 4) besteht, die über mindestens ein Rückstellelement (7) in einer Ruhestellung gehalten sind und jedes Segment (3, 4) eine Umlenkkontur (K) mit Führungsrillen (9) für die als Zugseile (8, 8a) ausgebildeten Zugglieder aufweist.

2. Vorrichtung nach Anspruch 1, dadurch gekennzeichnet, daß die Segmente (3, 4) eine teilkreisförmige Umlenkkontur (K) aufweisen.

3. Vorrichtung nach Anspruch 1, dadurch gekennzeichnet, daß die Umlenkkontur (K) spiralförmig verläuft, wobei der Einlauf am Segment (3, 4) und der Zulauf am Segment (3, 4) über eine Rampe (R) verbunden sind und der Einlauf einen Radius (R1) aufweist, der unterschiedlich zum Auslauf auf den Radius (R2) ausgebildet ist.

4. Vorrichtung nach Anspruch 1 oder einem der vorhergehenden Ansprüche, dadurch gekennzeichnet, daß die Segmente (3, 4) klauenartig ineinandergreifende Schenkel (10,11) umfassen, die Lagerabschnitte bilden, welche von einem die Schwenkachse (S) bildenden Zapfen (5) durchdrungen sind.

5. Vorichtung nach Anspruch 1 oder einem der vorhergehenden Ansprüche, dadurch gekennzeichnet, daß das Rückstellelement (7) aus einer Schenkelfeder besteht, die auf einem Bolzen (30) gehalten ist und jeder Schenkel der Feder unter Vorspannung auf ein Segment (3, 4) einwirkt.

6. Vorrichtung nach Anspruch 1 oder einem der vorhergehenden Ansprüche, dadurch gekennzeichnet, daß die Segmente (3, 4) jeweils äussere Anschlagflächen (12) und innere Anschlagflächen (13) aufweisen, die gegenüberstehend sind und eine gegenseite Abstützung der beiden Segmente (3, 4) unter Federspannung bilden.

7. Vorrichtung nach Anspruch loder einem der vorhergehenden Ansprüche, dadurch gekennzeichnet, daß die Segmente (3, 4) aufeinander über vertieft zur Außenoberfläche der Segmente angeordnete Flächenabschnitte (14, 15) geführt sind.

8. Vorrichtung nach Anspruch 1 oder einem der vorhergehenden Ansprüche, dadurch gekennzeichnet, daß ein Gehäuse (6) der Vorrichtung (1) an jeder Seite Einführkanäle (23) für die Zugseile ( 8, 8a) zu den Segmenten (3, 4) aufweist und die Kanäle (23) im Bereich der teilkreisförmigen Umlenkkontur (K), dieser Kontur (K) angenähert sind und in Führungskanälen (24) auslaufen.

9. Vorrichtung nach Anspruch 1 oder einem der vorhergehenden Ansprüche, dadurch gekennzeichnet, daß das Gehäuse (6) in einer Öffnung (20) eines Fahrzeugquerträgers (21) einsetzbar und über Schrauben (22) festsetzbar ist.

10. Vorrichtung nach Anspruch 1 oder einem der vorhergehenden Ansprüche, dadurch gekennzeichnet, daß die Zugseile (8, 8a) in den Führungsrillen (9) der Segmente (3, 4) in zwei Ebenen (Y-Y, X-X) verlaufen und im Übertragungselement (16) einhängbar sind, das über eine Stange (18) mit dem Handbremshebel verbindbar ist.

11. Vorrichtung nach Anspruch loder einem der vorhergehenden Ansprüche, dadurch gekennzeichnet, daß das Gehäuse (6) mit den Segmenten (3, 4) als vormontierbares Bauteil ausgeführt ist und die Zugseile (8, 8a) nachträglich über die Einführkanäle (23) in das Gehäuse (6) auf die Segmente (3, 4) einfädelbar sind.

12. Vorrichtung nach Anspruch 1 oder einem der vorhergehenden Ansprüche, dadurch gekennzeichnet, daß das Gehäuse (6) eine Abschlußplatte (6a) aufweist, die mit mindestens zwei Schraubenbohrungen (6b, 6c) versehen ist und in der Platte (6a) eine Nut (N) für ein Dichtelement vorgesehen ist, und zur Gehäuseplatte (6a) vorragende Lagerabschnitte für den Zapfen (5) vorgesehen sind, welche zu beiden Seiten im Querschnitt U-förmige Führungskanäle (24) aufweisen.

13. Vorrichtung nach Anspruch 1, dadurch gekennzeichnet, daß die inneren Führungskanäle (23) aus einem Kunststoff bestehen und mit dem Guß-Gehäuse (6) verbunden sind.

14. Vorrichtung nach Anspruch 1 oder einem der vorhergehenden Ansprüche, dadurch gekennzeichnet, daß die Segmente (3, 4) jeweils im Bereich von Lagerbohrungen (31, 32) Nasen (N1 und N2) aufweisen, die sich zur Positionierung in der Ruhestellung an einem Bolzen (30) abstützen.

## Claims

1. A device for actuating a parking brake for a motor vehicle with brake devices arranged on the wheel and actuable by way of traction members which pass around reversing members and are connected to a hand-brake lever with the interposition of a transmission member, **characterized in that** the reversing members [comprise] two segments (3, 4) mounted opposite each other and on a common pivot axis (**S**) and held in a rest position by way of at least one restoring member (7), and each segment (3, 4) is provided with a reversing contour (**K**) with guiding corrugations (9) for the traction members constructed in the form of traction cables (8, 8a).

2. A device according to Claim 1, **characterized in that** the segments (3, 4) have an arcuate reversing contour (**K**).

3. A device according to Claim 1, **characterized in that** the reversing contour (**K**) extends in a spiral, wherein the entry on the segment (3, 4) and the runner on the segment (3, 4) are connected by way of a ramp (**R**), and the inlet has a radius (**R1**) which is different from the exit onto the radius (**R2**).

4. A device according to Claim 1 or one of the preceding Claims, **characterized in that** the segments (3, 4) comprise arms (10, 11) interlocking in the manner of claws and forming bearing portions through which a pin (5) forming the pivot axis (**S**) passes.

5. A device according to Claim 1 or one of the preceding Claims, **characterized in that** the restoring member (7) comprises a leg spring held on a pin (30), and each leg of the spring acts upon a segment (3, 4) with pre-stressing.

6. A device according to Claim 1 or one of the preceding Claims, **characterized in that** the segments (3, 4) are provided in each case with outer stop faces (12) and inner stop faces (13), which are [mutually] opposite and form a mutual support of the two segments (3, 4) with spring stressing.

7. A device according to Claim 1 or one of the preceding Claims, **characterized in that** the segments (3, 4) are guided one above the other by way of surface portions (14, 15) arranged recessed with respect to the outer surface of the segments.

8. A device according to Claim 1 or one of the preceding Claims, **characterized in that** a housing (6) of the device (1) is provided on each side with insertion channels (23) for the traction cables (8, 8a) to the segments (3, 4), and the channels (23) in the region of the arcuate reversing contour (**K**) approach the said contour (**K**) and terminate in guide channels (24).

9. A device according to Claim 1 or one of the preceding Claims, **characterized in that** the housing (6) is insertable into an opening (20) of a vehicle cross-member (21) and is securable by way of bolts (22).

10. A device according to Claim 1 or one of the preceding Claims, **characterized in that** the traction cables (8, 8a) extend in two planes (**Y-Y, X-X**) in the guiding corrugations (9) of the segments (3, 4) and can be suspended in the transmission member (16) which can be connected to the hand-brake lever by way of a rod (18).

11. A device according to Claim 1 or one of the preceding Claims, **characterized in that** the housing (6) is produced with the segments (3, 4) as a pre-assembled component, and the traction cables (8, 8a) can subsequently be threaded by way of the insertion channels (23) into the housing (6) on the segments (3, 4).

12. A device according to Claim 1 or one of the preceding Claims, **characterized in that** the housing (6) is provided with a terminal plate (6a) having at least two screw bores (6b, 6c), and a groove (**N**) for a sealing member is provided in the plate (6a), and bearing portions projecting towards the housing plate (6a) and provided on both sides with guide channels (24) of U-shaped cross-section are provided for the pin (5).

13. A device according to Claim 1, **characterized in that** the inner guide channels (23) consist of a plastics material and are connected to the cast housing (6).

14. A device according to Claim 1 or one of the preceding Claims, **characterized in that** the segments (3, 4) are each provided in the region of bearing bores (31, 32) with projections (**N1** and **N2**) supported on a pin (30) in the rest position for positioning purposes.

## Revendications

1. Dispositif d'actionnement d'un frein de stationnement pour un véhicule automobile, comportant des dispositifs de freinage disposés sur la roue, qui peuvent être actionnés au moyen d'organes de traction, lesquels passent autour d'éléments de renvoi et sont reliés à un levier de frein à main, par montage intermédiaire d'un élément de transmission, caractérisé en ce que les éléments de renvoi sont constitués de deux segments (3, 4) montés opposés l'un à l'autre sur un axe de pivotement (S) commun et qui sont maintenus dans une position de repos par l'intermédiaire d'au moins un élément de rappel (7) et en ce que chaque segment (3, 4) présente un contour de renvoi (K) avec des gorges de guidage (9) pour les organes de traction réalisés sous la forme de câbles de traction (8, 8a).

2. Dispositif selon la revendication 1, caractérisé en ce que les segments (3, 4) présentent un contour de renvoi (K) en forme de cercle partiel.

3. Dispositif selon la revendication 1, caractérisé en ce que le contour de renvoi (K) s'étend en spirale, l'entrée sur le segment (3, 4) et la sortie sur le segment (3, 4) étant reliées par une rampe (R) et l'entrée présentant un rayon (R1) qui, contrairement à la sortie, est formé sur le rayon (R2).

4. Dispositif selon la revendication 1 ou l'une des revendications précédentes, caractérisé en ce que les segments (3, 4) comprennent des branches (10, 11) qui s'engagent l'une dans l'autre à la manière de griffes et qui forment des parties de palier traversées par une tige (5) qui forme l'axe de pivotement (S).

5. Dispositif selon la revendication 1 ou l'une des revendications précédentes, caractérisé en ce que l'élément de rappel (7) est constitué d'un ressort à branches qui est maintenu sur un axe (30) et en ce que chaque branche du ressort agit sous précontrainte sur un segment (3, 4).

6. Dispositif selon la revendication 1 ou l'une des revendications précédentes, caractérisé en ce que les segments (3, 4) présentent chacun des surfaces de butée extérieures (12) et des surfaces de butée intérieures (13) qui sont opposées l'une à l'autre et qui forment un appui réciproque pour les deux segments (3, 4), sous tension de ressort.

7. Dispositif selon la revendication 1 ou l'une des revendications précédentes, caractérisé en ce que les segments (3, 4) sont guidés l'un vers l'autre par l'intermédiaire de parties de surface (14, 15) disposées en profondeur par rapport à la surface extérieure des segments.

8. Dispositif selon la revendication 1 ou l'une des revendications précédentes, caractérisé en ce qu'un boîtier (6) du dispositif (1) présente sur chaque côté des canaux d'introduction (23) pour les câbles de traction (8, 8a) vers les segments (3, 4) et les canaux (23) s'approchent du contour de renvoi (K) en forme de cercle partiel, dans la région de ce contour (K) et débouchent dans des canaux de guidage (24).

9. Dispositif selon la revendication 1 ou l'une des revendications précédentes, caractérisé en ce que le boîtier (6) peut être inséré dans une ouverture (20) d'une poutre transversale (21) du véhicule et y être vissé au moyen de vis (22).

10. Dispositif selon la revendication 1 ou l'une des revendications précédentes, caractérisé en ce que les câbles de traction (8, 8a) s'étendent dans les gorges de guidage (9) des segments (3, 4) dans deux plans (Y-Y, X-X) et peuvent être accrochés dans l'élément de transmission (16) qui peut être relié au levier de frein à main par une tringle (18).

11. Dispositif selon la revendication 1 ou l'une des revendications précédentes, caractérisé en ce que le boîtier (6) avec les segments (3, 4) est réalisé sous la forme d'un composant prémonté et en ce que les câbles de traction (8, 8a) peuvent être enfilés ultérieurement, par les canaux d'introduction (23), dans le boîtier (6), sur les segments (3, 4).

12. Dispositif selon la revendication 1 ou l'une des revendications précédentes, caractérisé en ce que le boîtier (6) présente une plaque de fermeture (6a) qui est pourvue d'au moins deux trous de vis (6b, 6c) et dans la plaque (6a) est prévue une rainure (N) pour un élément d'étanchéité et en ce que pour la tige (5) sont prévues des parties de palier qui font saillie vers la plaque de boîtier (6a) et qui présentent des deux côtés des canaux de guidage (24) de section en U.

13. Dispositif selon la revendication 1, caractérisé en ce que les canaux de guidage intérieurs (23) sont constitués en matière plastique et sont reliés au boîtier en fonte (6).

14. Dispositif selon la revendication 1 ou l'une des revendications précédentes, caractérisé en ce que les segments (3, 4) présentent chacun, dans la région de trous de palier (31, 32), des ergots (N1 et N2) qui prennent appui contre un axe (30), pour leur positionnement dans la position de repos.
